# EUROPEAN PATENT APPLICATION

(11) **EP 4 502 282 A1**
(43) Date of publication of application: **05.02.2025**
(21) Application number: 23778747.8
(22) Date of filing: 18.01.2023
(51) Int. Cl.: E02F 9/00

(54) **MANAGEMENT SYSTEM FOR EXCAVATOR AND MANAGEMENT METHOD FOR EXCAVATOR**

(30) Priority: 31.03.2022 JP 2022061039
(71) Applicant: Sumitomo Construction Machinery Co., Ltd., Tokyo 141-6025 (JP)
(72) Inventor: HASHIMOTO, Kazutoshi, Chiba-shi, Chiba 263-0001 (JP); INOKUMA, Hiroshi, Chiba-shi, Chiba 263-0001 (JP); YOSHIDA, Kazuhiro, Chiba-shi, Chiba 263-0001 (JP)
(74) Representative: Louis Pöhlau Lohrentz
(86) International application number: PCT/JP2023/001251
(87) International publication number: WO 2023/188708

(57) **Abstract**

A shovel management system includes a shovel; a tag attached to a component of the shovel; and a management device for the shovel, wherein the shovel includes a writing unit configured to write machine identification information for identifying the shovel into the tag.

## Description

### TECHNICAL FIELD

The present invention relates to a shovel management system and a shovel management method.

### BACKGROUND ART

There is a known technique for identifying whether a replacement component is a genuine or counterfeit product, using an IC chip attached to a genuine replacement component and a sensor attached to a device into which the replacement component or the like is to be incorporated. In this technique, when the sensor detects required information from the IC chip, the sensor notifies a user that the replacement component is a genuine product, and when the sensor does not detect the required information from the IC chip, the sensor outputs an abnormality detection signal.

### RELATED ART DOCUMENT

### PATENT DOCUMENT

Patent Document 1: Japanese Unexamined Patent Application Publication No. 2005-273196

### SUMMARY OF THE INVENTION

### PROBLEMS TO BE SOLVED BY THE INVENTION

In the above-described conventional technology, for example, when the IC chip attached to the genuine product is replaced with another component such as a counterfeit product, there is a possibility that another component will be erroneously recognized as the genuine product.

In view of the above, it is desirable to prevent the erroneous recognition of a component.

### MEANS FOR SOLVING THE PROBLEMS

According to an embodiment of the present disclosure, a shovel management system is provided. The shovel management system includes:
a shovel;
a tag attached to a component of the shovel; and
a management device for the shovel,
wherein the shovel includes a writing unit configured to write machine identification information for identifying the shovel into the tag.

In addition, according to another embodiment of the present disclosure, a method for managing a shovel by a shovel management system is provided, wherein the shovel management system includes a shovel, a tag attached to a component of the shovel, and a shovel management device. The method includes:
causing the shovel to write machine identification information for identifying the shovel into the tag.

### EFFECTS OF THE INVENTION

According to the embodiment of the present invention, the erroneous recognition of a component can be prevented.

### BRIEF DESCRIPTION OF THE DRAWINGS

[FIG. 1] FIG. 1 is a diagram illustrating an example of a system configuration of a shovel management system.
[FIG. 2] FIG. 2 is a block diagram illustrating an example of a configuration of a drive system of the shovel.
[FIG. 3] FIG. 3 is a sequence diagram illustrating the operation of the management system.
[FIG. 4B] FIG. 4A is a first diagram illustrating information stored in a tag.

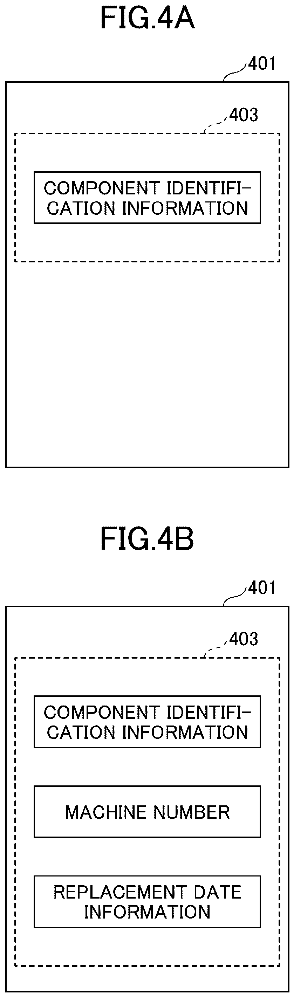

[FIG. 4B] FIG. 4B is a second diagram illustrating information stored in a tag.

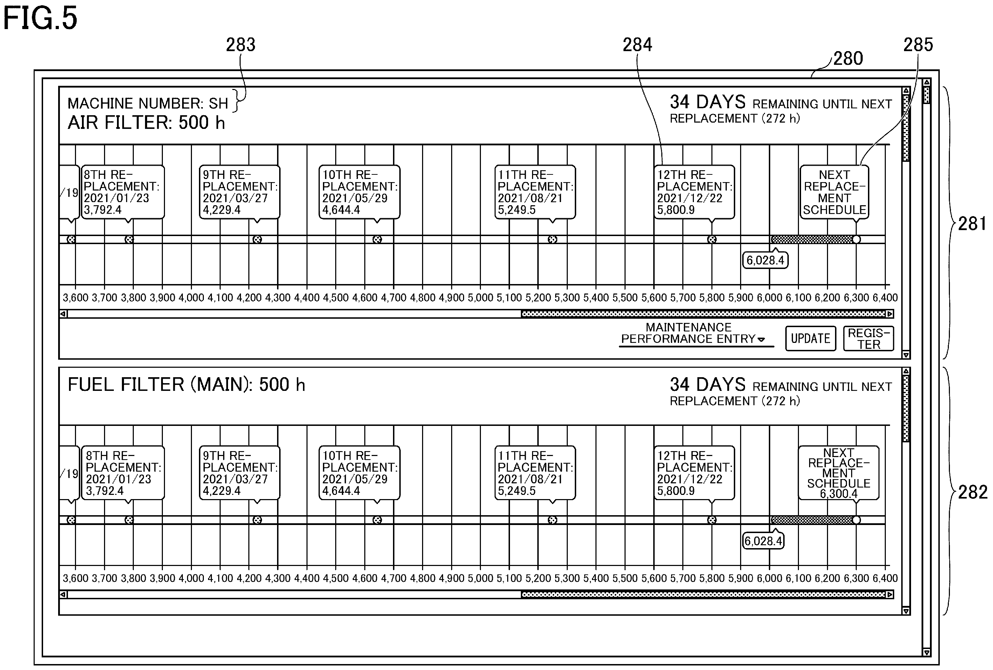

[FIG. 5] FIG. 5 is a diagram illustrating a first display example of maintenance information.

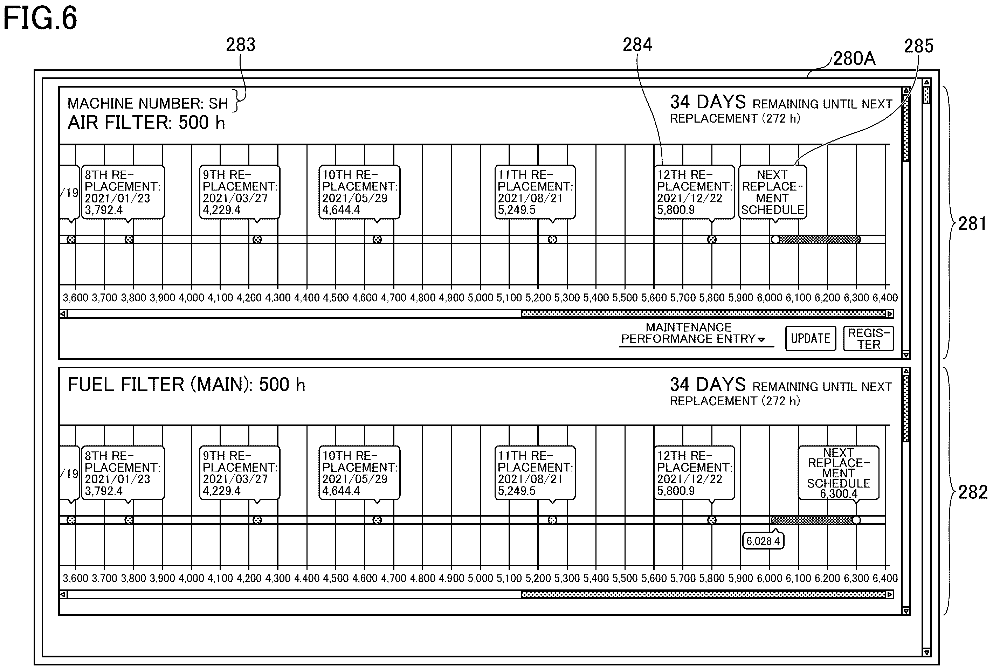

[FIG. 6] FIG. 6 is a diagram illustrating a second display example of maintenance information.

### DETAILED DESCRIPTION OF THE INVENTION

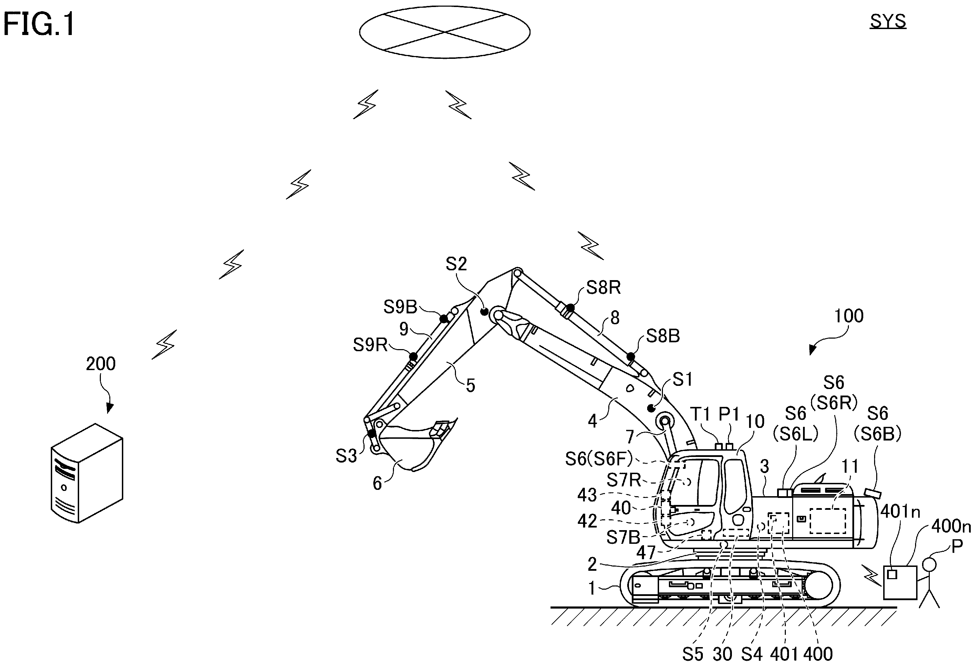

Hereinafter, embodiments will be described with reference to the accompanying drawings. FIG. 1 is a diagram illustrating an example of a system configuration of a shovel management system.

A shovel management system SYS according to the present embodiment includes a shovel 100, a management device 200 of the shovel 100, and a tag 401 attached to a component 400. In the following description, the shovel management system SYS is referred to as a management system SYS.

In the management system SYS, the shovel 100 and the management device 200 are connected to each other via a network and can communicate with each other.

The management device 200 receives operation information from the shovel 100 and manages a state of the shovel 100. The management device 200 according to the present embodiment is a computer including an arithmetic processing device (processor) and a storage device. In the management device 200, the storage device may store, for example, management information including maintenance information for the shovel 100. The arithmetic processing device reads and executes a program stored in the storage device, and thus various functions of the management device 200 are implemented. The various functions include, for example, updating of management information including maintenance information, displaying of maintenance information on a display device, and the like.

FIG. 1 illustrates a case where the component 400 incorporated in the shovel 100 is replaced with a new component 400n by a service person P. The components 400 and 400n are components manufactured by a manufacturer that manufactures the shovel 100. In other words, the components 400 and 400n are genuine products.

In the present embodiment, tags 401 and 401n each storing component identification information to identify a component are respectively attached to the component 400 incorporated in the shovel 100 and the new component 400n to replace the component 400. The component identification information stored in the tags 401 and 401n includes information indicating that the components 400 and 400n are genuine products.

The tags 401 and 401n of the present embodiment are tags that communicate with the shovel 100 by, for example, near field communication (radio frequency identification (RFID)) .

The shovel 100 according to the present embodiment has a function of reading information from the tags 401 and 401n and a function of writing information to the tags 401 and 401n.

In FIG. 1, when the component 400 is replaced with the component 400n, the component 400 is removed from the shovel 100. Then, the communication between the shovel 100 and the tag 401 is interrupted, and the shovel 100 is unable to read the component identification information stored in the tag 401. Thus, the shovel 100 detects that the component 400 to which the tag 401 is attached has been removed.

When the service person P attaches the new component 400n to the shovel 100, the shovel 100 resumes communication with the tag 401n of the component 400n and recognizes the component identification information stored in the tag 401n.

As described above, when the communication is resumed with the tag 401n after the communication with the tag 401 is once interrupted, the shovel 100 according to the present embodiment recognizes that the component 400 has been replaced with the component 400n.

When detecting that the component 400 has been replaced, the shovel 100 transmits, to the management device 200, a machine number (machine serial number or the like) as identification information of a machine body of the shovel 100 and information indicating that a replacement operation of the component 400 has been performed. Specifically, the shovel 100 transmits, to the management device 200, association information in which the machine number of the shovel 100 and the component identification information of the component 400n are associated with each other.

When the management device 200 receives the association information, the management device 200 updates the maintenance information and the like of the shovel 100 managed by the management device 200. The maintenance information for the shovel 100 may be a part of management information for managing various states of the shovel 100.

When the new component 400n is attached to the shovel 100 and communication with the attached tag 401n is started, the shovel 100 according to the present embodiment writes, into the tag 401n, the machine number of the shovel 100 and information indicating the date on which the new component 400n is attached to the shovel 100. The date on which the new component 400n is attached to the shovel 100 is, in other words, the date on which the component is replaced with the new component.

Therefore, in the present embodiment, the machine number of the shovel 100 and information indicating the date on which the component is replaced with the new component 400n are stored in the tag 401n that has once communicated with the shovel 100 as use history information of the tag 401n.

Therefore, in the present embodiment, even when the tag 401n is removed from the component 400n once attached to the shovel 100 and is attached to another component, previous use history information is stored in the tag 401n, and thus the shovel 100 does not recognize another component as a genuine product.

In this embodiment, the tag attached to the genuine product can be prevented from being reused. In addition, in the present embodiment, even when a tag that has previously been attached to a genuine product is attached to a counterfeit product, it is possible to prevent the counterfeit product from being erroneously recognized as a genuine product.

In addition, when another component is not recognized as a genuine product, the shovel 100 according to the present embodiment may block communication with the tag 401n attached to another component and may notify the management device 200 that the component has been replaced with a component that is not a genuine product.

Further, when another component attached to the shovel 100 is not recognized as a genuine product, the shovel 100 may not detect that the component has been replaced.

The shovel 100 according to the present embodiment includes a lower traveling body 1, a turning mechanism 2, and an upper turning body 3. In the shovel 100, an upper turning body 3 is turnably mounted on the lower traveling body 1 via a turning mechanism 2. A boom 4 is attached to the upper turning body 3. An arm 5 is attached to the distal end of the boom 4, and a bucket 6 as an end attachment is attached to the distal end of the arm 5.

The boom 4, the arm 5, and the bucket 6 constitute an excavation attachment as an example of an attachment. The boom 4 is driven by a boom cylinder 7, the arm 5 is driven by an arm cylinder 8, and the bucket 6 is driven by a bucket cylinder 9. A boom angle sensor S1 is attached to the boom 4, an arm angle sensor S2 is attached to the arm 5, and a bucket angle sensor S3 is attached to the bucket 6.

The boom angle sensor S1 is configured to detect a rotation angle of the boom 4. In the present embodiment, the boom angle sensor S1 is an accelerometer, and detects a rotation angle of the boom 4 with respect to the upper turning body 3 (hereinafter, referred to as a "boom angle"). The boom angle is, for example, a minimum angle when the boom 4 is lowered to the lowest position, and increases as the boom 4 is raised.

The arm angle sensor S2 is configured to detect a rotation angle of the arm 5. In the present embodiment, the arm angle sensor S2 is an accelerometer, and detects a rotation angle of the arm 5 with respect to the boom 4 (hereinafter, referred to as "arm angle"). The arm angle is, for example, a minimum angle when the arm 5 is closed to the maximum, and increases as the arm 5 is opened.

The bucket angle sensor S3 is configured to detect the rotation angle of the bucket 6. In the present embodiment, the bucket angle sensor S3 is an accelerometer, and detects the rotation angle of the bucket 6 with respect to the arm 5 (hereinafter, referred to as "bucket angle"). The bucket angle is, for example, a minimum angle when the bucket 6 is closed to the maximum, and increases as the bucket 6 is opened.

The boom angle sensor S1, the arm angle sensor S2, and the bucket angle sensor S3 may be a potentiometer using a variable resistor, a stroke sensor that detects a stroke amount of the corresponding hydraulic cylinder, and a rotary encoder that detects a rotation angle around a coupling pin, a gyro sensor, or a combination of the accelerometer and the gyro sensor, or the like.

A boom rod pressure sensor S7R and a boom bottom pressure sensor S11B are attached to the boom cylinder 7. An arm rod pressure sensor S8R and an arm bottom pressure sensor S8B are attached to the arm cylinder 8.

A bucket rod pressure sensor S9R and a bucket bottom pressure sensor S9B are attached to the bucket cylinder 9. The boom rod pressure sensor S7R, the boom bottom pressure sensor S11B, the arm rod pressure sensor S8R, the arm bottom pressure sensor S8B, the bucket rod pressure sensor S9R, and the bucket bottom pressure sensor S9B are collectively referred to as "cylinder pressure sensors".

The boom rod pressure sensor S7R detects the boom rod pressure in the rod side oil chamber of the boom cylinder 7. The boom bottom pressure sensor S11B detects the boom bottom pressure in the bottom side oil chamber of the boom cylinder 7. The arm rod pressure sensor S8R detects the pressure in the rod side oil chamber of the arm cylinder 8 (hereinafter referred to as "arm rod pressure"). The arm bottom pressure sensor S8B detects the pressure in the bottom side oil chamber of the arm cylinder 8 ("arm rod pressure") .

The bucket rod pressure sensor S9R detects the bucket rod pressure in the rod side oil chamber of the bucket cylinder 9. The bucket bottom pressure sensor S9B detects the bucket bottom pressure in the bottom side oil chamber of the bucket cylinder 9.

The upper turning body 3 is provided with a cabin 10 as an operator cab and a power source such as an engine 11. A sensor for detecting the amount of CO₂ discharged may be provided in the vicinity of the discharge mechanism of the engine 11.

Further, the upper turning body 3 is provided with a controller 30, a display device 40, an input device 42, an audio output device 43, a storage device 47, a positioning device P1, a machine inclination sensor S4, a turning angular velocity sensor S5, an imaging device S6, and a communication device T1.

The upper turning body 3 may be mounted with a power storage unit that supplies electric power, a motor generator that generates electric power using the rotational driving force of the engine 11, and the like. The power storage unit is, for example, a capacitor or a lithium ion battery. The motor generator may function as a motor to drive a mechanical load or as a generator to supply electric power to an electrical load.

The controller 30 functions as a main control unit that performs drive control of the shovel 100. In the present embodiment, the controller 30 includes a CPU, a RAM, a ROM, and the like. The controller 30 may include a CPU, a RAM, a ROM, and a circuit that handles an analog signal, which will be described later.

The various functions of the controller 30 are implemented by the CPU executing programs stored in the ROM, for example. The various functions may include, for example, at least one of a machine guidance function of guiding the manual operation of the shovel 100 by an operator and a machine control function of automatically supporting the manual operation of the shovel 100 by the operator.

The display device 40 is configured to display various kinds of information. The display device 40 may be connected to the controller 30 via a communication network such as a control area network (CAN), or may be connected to the controller 30 via a dedicated line.

The input device 42 is configured to allow the operator to input various kinds of information to the controller 30. The input device 42 includes at least one of a touch panel, a knob switch, a membrane switch, and the like installed in the cabin 10.

The audio output device 43 is configured to output audio. The audio output device 43 may be, for example, an in-vehicle speaker connected to the controller 30, or an alarm such as a buzzer. In the present embodiment, the audio output device 43 is configured to output various kinds of information by audio in response to an audio output instruction from the controller 30.

The storage device 47 is configured to store various kinds of information. The storage device 47 is, for example, a nonvolatile storage medium such as a semiconductor memory. The storage device 47 may store information output from various devices during the operation of the shovel 100, or may store information acquired via various devices before the operation of the shovel 100 is started.

The storage device 47 may store, for example, information on a target construction surface acquired via the communication device T1 or the like. The target construction surface may be set by the operator of the shovel 100 or may be set by a construction manager or the like.

The positioning device P1 is configured to measure the position of the upper turning body 3. The positioning device P1 may be configured to measure the orientation of the upper turning body 3. In the present embodiment, the positioning device P1 is, for example, a GNSS compass, and detects the position and orientation of the upper turning body 3 and outputs the detected values to the controller 30. Therefore, the positioning device P1 can also function as an orientation detection device that detects the orientation of the upper turning body 3. The orientation detection device may be an azimuth sensor attached to the upper turning body 3.

The machine inclination sensor S4 is configured to detect the inclination of the upper turning body 3. In the present embodiment, the machine inclination sensor S4 is an accelerometer that detects a front-rear inclination angle around the front-rear axis and a left-right inclination angle around the left-right axis of the upper turning body 3 with respect to the virtual horizontal plane. The longitudinal axis and the lateral axis of the upper turning body 3 are orthogonal to each other at, for example, a shovel center point which is one point on the turning axis of the shovel 100.

The turning angular velocity sensor S5 is configured to detect a turning angular velocity of the upper turning body 3. The turning angular velocity sensor S5 may be configured to detect or calculate the turning angle of the upper turning body 3. In the present embodiment, the turning angular velocity sensor S5 is a gyro sensor. The turning angular velocity sensor S5 may be a resolver, a rotary encoder, or the like.

The imaging device S6 is an example of a space recognition device and is configured to acquire an image of the surroundings of the shovel 100. In the present embodiment, the imaging device S6 includes a front camera S6F that images a space in front of the shovel 100, a left camera S6L that images a space on the left side of the shovel 100, a right camera S6R that images a space on the right side of the shovel 100, and a rear camera S6B that images a space behind the shovel 100.

The imaging device S6 is, for example, a monocular camera having an imaging element such as a CCD or a CMOS, and outputs a captured image to the display device 40. The imaging device S6 may be a stereo camera, a range image camera, or the like. The imaging device S6 may be replaced with another space recognition device such as a three dimensional range image sensor, an ultrasonic sensor, a millimeter wave radar, a LIDAR, or an infrared sensor, or may be replaced with a combination of another space recognition device and a camera.

The front camera S6F is mounted on, for example, the ceiling of the cabin 10, that is, inside the cabin 10. However, the front camera S6F may be attached to the outside of the cabin 10, such as the roof of the cabin 10 or the side surface of the boom 4. The left camera S6L is attached to the left end of the upper surface of the upper turning body 3, the right camera S6R is attached to the right end of the upper surface of the upper turning body 3, and the rear camera S6B is attached to the rear end of the upper surface of the upper turning body 3.

The communication device T1 is configured to control communication with an external device situated outside the shovel 100. In the present embodiment, the communication device T1 controls communication with external devices via satellite networks, mobile telephone networks, Internet networks, or the like. The external device may be, for example, the management device 200 such as a server installed in an external facility.

The shovel 100 may be configured to transmit various kinds of information relating to the shovel 100 to the management device 200 at predetermined time intervals via the communication device T1. With this configuration, an operator, a manager, or the like outside the shovel 100 can visually recognize various kinds of information on the shovel 100 through a display device such as a monitor connected to the management device 200.

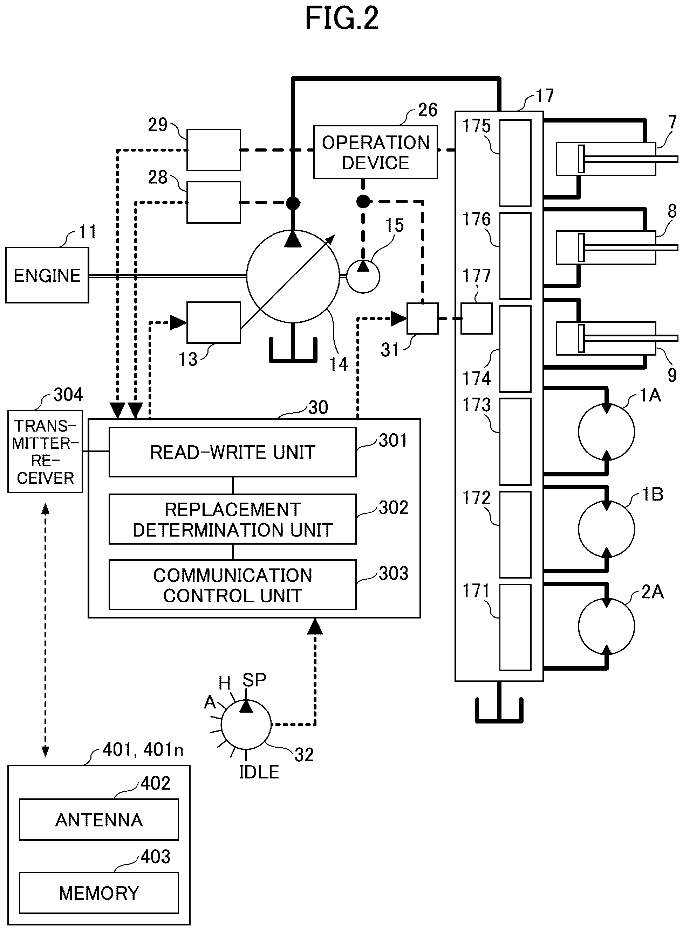

Next, a configuration of a drive system of the shovel 100 will be described with reference to FIG. 2. FIG. 2 is a block diagram illustrating an example of a configuration of a drive system of the shovel. In FIG. 2, a mechanical power system, a high-pressure hydraulic line, a pilot line, and an electric control system are indicated by a double line, a thick solid line, a broken line, and a dotted line, respectively.

As illustrated in FIG. 2, the drive system of the shovel 100 mainly includes the engine 11, a regulator 13, a main pump 14, a pilot pump 15, a control valve 17, an operation device 26, a discharge pressure sensor 28, an operation pressure sensor 29, the controller 30, a proportional valve 31, a work mode selection dial 32, and the like.

The engine 11 is a drive source of the shovel. In the present embodiment, the engine 11 is, for example, a diesel engine that operates to maintain a predetermined rotational speed. An output shaft of the engine 11 is connected to input shafts of the main pump 14 and a pilot pump 15.

The main pump 14 supplies the hydraulic oil to the control valve 17 via the high-pressure hydraulic line. In the present embodiment, the main pump 14 is a swash plate type variable displacement hydraulic pump.

The regulator 13 controls a discharge amount of the main pump 14. In the present embodiment, the regulator 13 controls the discharge amount of the main pump 14 by adjusting a swash plate tilting angle of the main pump 14 in response to a control instruction from the controller 30.

The pilot pump 15 supplies the hydraulic oil to various hydraulic control devices including the operation device 26 and the proportional valve 31 via the pilot line. In the present embodiment, the pilot pump 15 is a fixed displacement hydraulic pump.

The control valve 17 is a hydraulic control device that controls a hydraulic system in the shovel. The control valve 17 includes control valves 171 to 176 and a bleed valve 177. The control valve 17 can selectively supply the hydraulic oil discharged from the main pump 14 to one or a plurality of hydraulic actuators through the control valves 171 to 176.

The control valves 171 to 176 control the flow rate of the hydraulic oil flowing from the main pump 14 to the hydraulic actuator and the flow rate of the hydraulic oil flowing from the hydraulic actuator to the hydraulic oil tank. The hydraulic actuators include the boom cylinder 7, the arm cylinder 8, the bucket cylinder 9, a left traveling hydraulic motor 1A, a right traveling hydraulic motor 1B, and a turning hydraulic motor 2A.

The bleed valve 177 controls the flow rate of hydraulic oil discharged by the main pump 14 that flows to the hydraulic oil tank without passing through the hydraulic actuator (hereinafter referred to as "bleed flow rate"). The bleed valve 177 may be located outside the control valve 17.

The operation device 26 is a device used by an operator to operate the hydraulic actuator. In the present embodiment, the operating device 26 supplies the hydraulic oil discharged by the pilot pump 15 to pilot ports of the control valves corresponding to the hydraulic actuators via the pilot lines. The pressure (pilot pressure) of the hydraulic oil supplied to each of the pilot ports is controlled by a lever or a pedal (not illustrated) of the operation device 26 corresponding to each of the hydraulic actuators. The pressure is a pressure corresponding to the operation direction and operation amount of the actuator.

The discharge pressure sensor 28 detects the discharge pressure of the main pump 14. In the present embodiment, the discharge pressure sensor 28 outputs the detected value to the controller 30.

The operation pressure sensor 29 detects an operation content of the operator using the operation device 26. In the present embodiment, the operation pressure sensor 29 detects the operation direction and the operation amount of the lever or the pedal of the operation device 26 corresponding to each of the hydraulic actuators in the form of pressure (operation pressure), and outputs the detected value to the controller 30. The operation content of the operation device 26 may be detected using a sensor other than the operation pressure sensor.

The controller 30 is a control unit that controls the entire shovel 100. The functions of the controller 30 of the present embodiment will be described in detail later.

The proportional valve 31 operates in response to a control instruction output from the controller 30. In the present embodiment, the proportional valve 31 is an electromagnetic valve that adjusts the secondary pressure introduced from the pilot pump 15 to the pilot port of the bleed valve 177 in the control valve 17, in response to the current instruction output from the controller 30. The proportional valve 31 operates such that, for example, the secondary pressure introduced into the pilot port of the bleed valve 177 increases as the current instruction increases.

The work mode selection dial 32 is a dial for the operator to select an operation mode, and enables switching between a plurality of different operation modes. Data indicating the setting state of the engine speed and the setting state of the acceleration-deceleration characteristics corresponding to the work mode is constantly transmitted from the work mode selection dial 32 to the controller 30.

The work mode selection dial 32 is configured to switch the work mode in a plurality of stages including an SP mode, an H mode, an A mode, and an IDLE mode. That is, the work mode selection dial 32 of the present embodiment can switch the setting condition of the shovel 100.

The SP mode is an example of a first mode, and the H mode is an example of a second mode. FIG. 2 illustrates a state in which the SP mode is selected by the work mode selection dial 32.

The SP mode is a work mode selected when the work amount is prioritized, and uses the highest engine speed and the highest acceleration-deceleration characteristics. The H mode is a work mode selected when it is desired to achieve both the work amount and the fuel efficiency, and uses the second highest engine speed and the second highest acceleration-deceleration characteristics.

The A mode is a work mode selected when it is desired to operate the shovel with low noise by moderating acceleration and deceleration characteristics of the hydraulic actuator corresponding to the lever operation and improving accurate operability and safety, and uses the third highest engine speed and the third highest acceleration-deceleration characteristics. The IDLE mode is a work mode selected when the engine 11 is desired to be in a low idling state, and uses the lowest engine speed and the lowest acceleration-deceleration characteristics.

Here, when the operation of each actuator is stopped while the engine is being driven in each work mode (high idling state), the controller 30 causes the engine 11 to maintain the rotation speed set for each work mode. The controller 30 may switch the engine speed to a low idling state when the high idling state continues for a predetermined time. The idling state includes the high idling state and the low idling state.

In the above description, the names of the respective stages of the work mode are the SP mode, the H mode, the A mode, and the IDLE mode, but the names of the respective stages are not limited thereto. For example, the names of the SP mode, the H mode, and the A mode may be a POWER mode, an STD mode, an ECO mode, and an IDLE mode (low idling state), respectively. The work mode is not limited to the above-described examples of the present embodiment, and may be set to five or more stages.

The engine 11 is controlled to rotate at a constant speed corresponding to the engine speed in the work mode set by the work mode selection dial 32. The opening of the bleed valve 177 is controlled based on a bleed valve opening characteristic of the operation mode set by the work mode selection dial 32. The bleed valve opening characteristic will be described later.

In the present embodiment, each of the above-described work modes may be referred to as a setting condition of the shovel 100, and information indicating the setting condition may be referred to as setting condition information. The setting condition information is information in which a specified item and a value of the item are associated with each other. The specified item is, for example, an item indicating the state of the engine speed corresponding to each work mode or an item indicating the state of the acceleration-deceleration characteristics. Therefore, the setting condition information of the present embodiment includes an item and a value of the item indicating the state of the engine speed corresponding to each work mode, and an item and a value of the item indicating the state of the acceleration-deceleration characteristics.

In the configuration diagram of FIG. 2, the ECO mode is set as one of the modes selected by the work mode selection dial 32, but the ECO mode switch may be provided separately from the work mode selection dial 32. In this case, the engine speed may be adjusted in accordance with each mode selected using the work mode selection dial 32, and the acceleration-deceleration characteristics corresponding to each mode of the work mode selection dial 32 may be gradually changed when the ECO mode switch is turned on.

Further, the change of the work mode may be implemented by voice input. In this case, the shovel is provided with a voice input device for inputting a voice uttered by the operator to the controller 30. The controller 30 is provided with a voice identification unit for identifying a voice input by the voice input device.

In this manner, the operation mode is selected by the work mode selection dial 32, the ECO mode switch, the voice identification unit, and the like.

Next, the function of the controller 30 of the present embodiment will be described. The controller 30 of the present embodiment includes a read-write unit 301, a replacement determination unit 302, and a communication control unit 303.

The read-write unit 301 reads information stored in a memory 403 of a tag 401. That is, the read-write unit 301 of the present embodiment is an example of a reading unit that reads information from a tag.

Specifically, the read-write unit 301 converts (demodulates) an analog signal received from the tag 401 via a transmitter-receiver 304 into a digital signal, and transfers the digital signal to the replacement determination unit 302 implemented by the CPU in the subsequent stage. The analog signal received from the tag 401 or the tag 401n is an analog signal transmitted from an antenna 402 of the tag 401 and includes the component identification information stored in the memory 403. The transmitter-receiver 304 of the present embodiment will be described. The transmitter-receiver 304 of the present embodiment may be attached to a position where the tag 401n can be read when the service person P attaches the component 400n to the shovel 100, for example.

The read-write unit 301 writes the machine number and the replacement date information into the memory 403 of the tag 401n in response to an instruction from the replacement determination unit 302. That is, the read-write unit 301 of the present embodiment is an example of a writing unit that writes information to a tag.

The transmitter-receiver 304 may include the read-write unit 301 and the replacement determination unit 302. In this case, the power supply to the transmitter-receiver 304 includes a battery different from the battery that supplies power to the controller 30 of the shovel 100. Therefore, even when the engine is off or the controller 30 is off, the information written in the tag 401 can be determined by the transmitter-receiver 304. When the controller 30 is in the ON state, information of the transmitter-receiver 304 is transmitted to the controller 30. The power source of the transmitter-receiver 304 may also serve as a battery that supplies power to the controller 30 of the shovel 100. In this case, only the controller 30 may be turned on by a signal from the outside of the shovel 100.

More specifically, the read-write unit 301 converts (modulates) the machine number and the replacement date information into an analog signal, and transmits the analog signal to the tag 401n via the transmitter-receiver 304. In the tag 401n, the machine number and the replacement date information included in the analog signal are written into the memory 403.

The replacement determination unit 302 determines whether the communication with the tag 401 by the read-write unit 301 is interrupted. The replacement determination unit 302 determines whether the information read by the read-write unit 301 is only the component identification information of the component 400n after the communication with the tag 401 is interrupted.

When the read information is only the component identification information of the component 400n, the replacement determination unit 302 determines that the replacement of the component 400 with the component 400n is completed. When the replacement is completed, the replacement determination unit 302 stores association information in which the component identification information of the component 400n and the machine number of the shovel 100 are associated with each other in the storage device included in the shovel 100.

Subsequently, the replacement determination unit 302 instructs the read-write unit 301 to write the machine number and the replacement date information in the tag 401n.

In addition, the replacement determination unit 302 blocks the communication between the read-write unit 301 and the tag 401n when information other than the component identification information of the component 400n is included in the information read by the read-write unit 301 after the communication with the tag 401 is interrupted. The information other than the component identification information of the component 400n is the previous use history information of the tag 401n, which includes the machine number of the shovel 100 and the replacement date information.

The communication control unit 303 communicates with an external device such as the management device 200 via the communication device T1. Specifically, the communication control unit 303 may transmit, to the management device 200, association information in which the component identification information of the component 400n and the machine number of the shovel 100 are associated with each other, a notification indicating that a component to which a tag having a use history is attached, is attached, or the like.

In FIG. 2, the controller 30 includes the read-write unit 301, but the present invention is not limited thereto. The read-write unit 301 may be provided outside the controller 30.

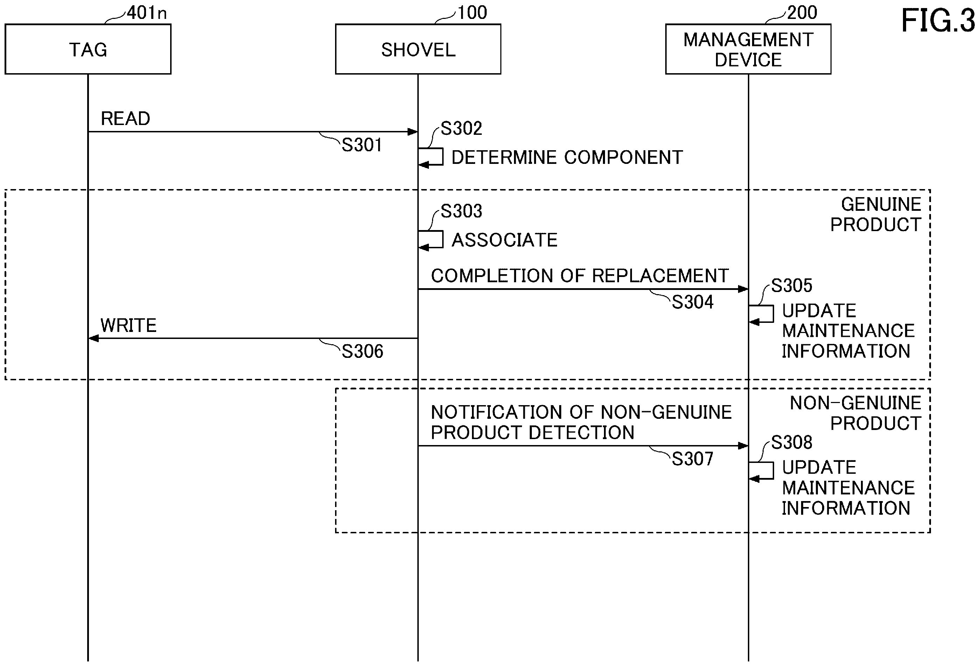

Next, the operation of the management system SYS according to the present embodiment will be described with reference to FIG. 3. FIG. 3 is a sequence diagram illustrating an operation of the management system.

FIG. 3 illustrates the operation of the management system SYS after the component 400 is removed from the shovel 100 and the communication between the tag 401 of the component 400 and the read-write unit 301 is interrupted.

The shovel 100 according to the present embodiment reads information from the tag 401n of a new component 400n by the read-write unit 301 (step S301). At this time, the hydraulic actuator is in a non-operating state in which the hydraulic actuator is not operated due to the interruption of the hydraulic circuit by the gate lock valve or the like.

Subsequently, the shovel 100 determines whether the component 400n is a genuine product by the replacement determination unit 302 (step S302).

Specifically, the replacement determination unit 302 determines whether the information read in step S301 is only the component identification information. Then, when the read information is only the component identification information, the replacement determination unit 302 determines that the component 400n is a genuine product. When the read information includes the machine number (machine identification information) that has been written previously, the replacement determination unit 302 can determine that the component 400n is a component other than a component that is a genuine product. In this way, by reading the already written machine number (machine identification information), it is possible to determine which machine the tag 401 has been previously used for, where the tag 401 has been used, and the like.

The replacement determination unit 302 may hold the component identification information of the component 400n in advance, and may compare the component identification information read by the read-write unit 301 with the component identification information held in advance and determine that the component 400n is a genuine product when the two pieces of information match. In addition, when the component identification information read by the read-write unit 301 is the component identification information of a component other than the component 400n, the replacement determination unit 302 may output a notification, an alarm, or the like indicating that a component of a different type from the removed component is about to be attached.

The processing from step S303 to step S306 in FIG. 3 is processing when the component 400n is determined to be a genuine product in step S302. The processing in steps S306 and S307 in FIG. 3 is processing when the component 400n is not a genuine product.

When the shovel 100 is determined to be a genuine product in step S302, the replacement determination unit 302 stores association information in which the machine number of the shovel 100, the component identification information of the component 400n, and the replacement date information are associated with each other (step S303). The machine number of the shovel 100 may be stored in advance in the ROM or the like of the controller 30.

Subsequently, the shovel 100 transmits a notification indicating that the component 400 has been replaced with the component 400n to the management device 200 via the communication control unit 303 (step S304). Specifically, the replacement determination unit 302 transmits the association information to the management device 200 as a notification of the completion of the replacement of the component 400n.

The management device 200 receives the notification and updates the maintenance information managed by the management device 200 (step S305).

Specifically, the management device 200 may add replacement history information indicating that the component 400 has been replaced with the component 400n in the maintenance information for the shovel 100 included in the management information. The management device 200 may calculate a scheduled replacement date, etc. of the component 400n and include the scheduled replacement date in the maintenance information.

Subsequently, the replacement determination unit 302 of the shovel 100 instructs the read-write unit 301 to write the machine number of the shovel 100 and the replacement date information, and the read-write unit 301 writes the machine number as the machine identification information and the replacement date information to the tag 401n (step S306).

The processing from step S303 to step S306 in FIG. 3 may be performed after the component 400n is attached to the shovel 100. In addition, from among the processing from step S303 to step S306 in FIG. 3, step S305 may be performed before the component 400n is attached to the shovel 100, and step S306 may be performed after the component 400n is attached to the shovel 100.

For example, a mechanism for fixing the component 400n may be provided in the machine body of the shovel 100. Further, when the component 400n is fixed by this mechanism, the shovel 100 may detect that the component 400n is attached to the shovel 100.

The above description is the processing of the management system SYS when the component 400n is a genuine product. In the present embodiment, the information written in the tag 401n is the machine number and the replacement date information, but the information written in the tag 401n is not limited to this example. In the present embodiment, the machine number may be written in the tag 401n, and the replacement date information may not be written.

Next, a case where the component 400n is not a genuine product will be described. When the component is not determined to be a genuine product in step S302, the replacement determination unit 302 transmits a notification indicating that the component 400 has been replaced with a component 400n that is not a genuine product to the management device 200 via the communication control unit 303 (step S307).

The case where the component 400n is not determined to be genuine in step S302 is a case where the information read from the tag 401n includes information other than the component identification information.

The management device 200 receives the notification and updates the maintenance information managed by the management device 200 (step S308).

More specifically, the management device 200 may add information indicating that the component 400n which is not a genuine product is used to the maintenance information for the component corresponding to the component identification information read in step S301.

In this case, the component 400 is replaced with the component 400n which is a non-genuine product, and hence, the component 400 is not appropriately replaced. Therefore, the management device 200 may maintain a state in which the replacement of the component 400 of the shovel 100 is not completed in the maintenance information. In this way, the replacement timing of the next component 400 is not updated, and thus the replacement of the component 400 is instructed at an early timing.

For example, when information corresponding to the component identification information read in step S301 is not present in the maintenance information, the management device 200 may output a warning or the like indicating that an inappropriate component is about to be attached to the shovel 100 without updating the maintenance information.

Here, changes in information stored in the memory 403 of the tag 401n of the present embodiment will be described with reference to FIG. 4A and FIG. 4B. FIG. 4A is a first diagram illustrating information stored in a tag, and FIG. 4B is a second diagram illustrating information stored in a tag.

FIGS. 4A and 4B illustrate changes in information stored in the memory 403 when the component 400n is a genuine product.

FIG. 4A illustrates the memory 403 of the tag 401n in step S301 of FIG. 3. That is, FIG. 4A illustrates a state before the component 400n is attached to the shovel 100.

In this case, only the component identification information of the component 400n to which the tag 401n is attached is stored in the memory 403.

FIG. 4B illustrates the memory 403 of the tag 401n in step S306 of FIG. 3. In other words, FIG. 4B illustrates a state where the writing of the machine number and the replacement date information by the read-write unit 301 is completed after the component 400n is attached to the shovel 100. FIG. 4B indicates that the machine number and the replacement date information are stored in the memory 403.

In the present embodiment, as described above, once the tag 401n attached to the component 400n that is a genuine product is used, information other than the component identification information is written in the memory 403. Therefore, in the present embodiment, for example, even when the tag 401n in the state illustrated in FIG. 4B is detached from the component 400n and attached to another component, the tag 401n that has been used previously can be detected. Therefore, in the present embodiment, the component will not be erroneously recognized as a genuine product of another component.

Next, management of maintenance information in the management device 200 will be described with reference to FIGS. 5 and 6.

FIG. 5 is a diagram illustrating a first display example of maintenance information. A screen 280 illustrated in FIG. 5 is an example of a screen when maintenance information for the shovel 100 is displayed on, for example, a display of the management device 200.

The screen 280 is an example of a list screen of the replacement history for each component of the shovel 100. In addition, FIG. 5 illustrates a list screen of the replacement history in a case where the component 400n is a genuine product.

The screen 280 includes display regions 281, 282, and 283. The display region 281 displays replacement history information of an air filter as an example of the component 400n. In the display region 282, replacement history information of a fuel filter is displayed as an example of the component 400n. The horizontal axis in the display regions 281 and 282 indicates the cumulative operating time of the shovel 100. The machine number of the shovel 100 is displayed in the display region 283.

In the management device 200, when the screen 280 is scrolled downward, the replacement history information is displayed for components other than the air filter, the fuel filter, the oil filter, and the hydraulic oil filter.

When the management device 200 of the present embodiment receives, from an assistance device 300, the notification indicating that the replacement with the component 400n is completed in the shovel 100, the management device 200 reflects the notification in the maintenance information.

Specifically, the management device 200 adds, to the maintenance information corresponding to the machine number of the shovel 100 included in the notification, the replacement history information of the component corresponding to the component identification information included in the notification.

In the screen 280, new replacement history information indicating that the replacement of the air filter has been completed is displayed in a display region 284.

In addition, in the screen 280, information indicating the next replacement date of the air filter is displayed in a display region 285. In the example of FIG. 5, since the air filter newly attached to the shovel 100 is a genuine product, the next replacement date is set to be after the elapse of a predefined operation time.

In the present embodiment, since the completion of the replacement of the component of the shovel 100 is automatically reflected in the maintenance information, the service engineer does not need to input the work content to the management device 200. Therefore, according to the present embodiment, it is possible to prevent the maintenance information from being not updated due to a human error such as a failure to input by the service engineer, and to cause the user of the management device 200 to identify accurate maintenance information.

FIG. 6 is a diagram illustrating a second display example of the maintenance information. FIG. 5 illustrates a list screen of the replacement history in the case where the component 400n is not a genuine product. The non-genuine product is a component to which a tag 401n storing information indicating a previous use history in the memory 403 is attached.

FIG. 6 illustrates a case where the air filter whose replacement history information is displayed in the display region 281 is replaced with an air filter that is not a genuine product.

When the management device 200 of the present embodiment receives a notification indicating that the air filter has been replaced with a non-genuine air filter, the management device 200 shortens the time period until the next replacement date of the air filter, compared to the time when the air filter is a genuine air filter.

In the screen 280A illustrated in FIG. 6, information indicating the next replacement date of the air filter is displayed in a display region 285A. Here, it is found that the period from the display region 284 to the display region 285A is shorter than the period from the display region 284 to the display region 285 in FIG. 5.

In the present embodiment, by changing the period so that the period until the next replacement date is shortened, it is possible to prompt the manager, the service person, or the like of the shovel 100 to quickly replace the air filter that is non-genuine product with a genuine product.

In the example of FIG. 6, the air filter replacement history information is displayed in the display region 284, but the present invention is not limited to this configuration. On the screen 280A, a warning or the like indicating that the air filter is not genuine product may be displayed in the display region 284.

The present embodiment is effectively applied to components such as an air filter, a fuel filter, an oil filter, and a hydraulic oil filter that require periodic replacement due to continuous operation of the shovel 100. However, the components to which the present embodiment is applied are not limited to such components that require periodic replacement. The transmitter-receiver 304 is disposed in a space where a component that needs to be periodically replaced is disposed. Specifically, the transmitter-receiver 304 is preferably disposed in, for example, a pump chamber in which a plurality of filters such as a fuel filter are disposed, an intake chamber in which an air filter is disposed, or the like.

In addition, the management device 200 may not display the replacement history information when the component is replaced with a component that is not a genuine product. In this case, the display region 284 may not be displayed in the display region 281, and the display region 285A may be displayed.

In the present embodiment, as described above, the display mode of the maintenance information is changed depending on whether the replaced component is a genuine product, and thus it is possible to allow the manager or the like to easily identify whether the component attached to the shovel 100 is a genuine product.

In addition, in the present embodiment, the next maintenance timing is changed according to whether the replaced component is a genuine product, and thus it is possible to prompt the manager or the like to replace the component that is a non-genuine product with a genuine product at an early stage.

Although the embodiment for carrying out the present invention have been described above, the above contents are not intended to limit the contents of the invention, and various modifications and improvements can be made within the scope of the present invention.

The present international application claims priority to Japanese Patent Application No. 2022-061039 filed on March 31, 2022, and the entire contents of Japanese Patent Application No. 2022-061039 are incorporated herein by reference.

### DESCRIPTION OF THE REFERENCE NUMERALS

- 1: lower traveling body
- 2: turning mechanism
- 3: upper turning body
- 30: controller
- 40: display device
- 100: shovel
- 200: management device
- 301: read-write unit
- 302: replacement determination unit
- 303: communication control unit
- 400, 400n: component
- 401, 401n: tag

## Claims

1. A shovel management system comprising:
a shovel;
a tag attached to a component of the shovel; and
a management device for the shovel,
wherein the shovel includes a writing unit configured to write machine identification information for identifying the shovel into the tag.

2. The shovel management system according to claim 1,
wherein the shovel further includes:
a reading unit configured to read component identification information of the component stored in advance in the tag, and
a communication control unit configured to transmit the component identification information and the machine identification information to the management device in association with each other.

3. The shovel management system according to claim 2,
wherein the shovel further includes:
a determination unit configured to determine whether information read from the tag by the reading unit includes the machine identification information, and
wherein the writing unit performs writing to the tag when the information read from the tag does not include the machine identification information.

4. The shovel management system according to claim 2 or 3,
wherein the reading unit reads the component identification information of the component before the component is attached to the shovel, and
the writing unit writes the machine identification information after the component is attached to the shovel.

5. The shovel management system according to any one of claims 2 to 4,
wherein the communication control unit of the shovel transmits, when information other than the component identification information is included in the information read from the tag, a notification indicating a fact that the information other than the component identification information is included in the information read from the tag to the management device, and
wherein the management device changes a next replacement timing included in maintenance information for the component to which the tag is attached.

6. A method for managing a shovel by a shovel management system, the shovel management system including a shovel, a tag attached to a component of the shovel, and a shovel management device, the method comprising:
causing the shovel to write machine identification information for identifying the shovel into the tag.
